# EUROPEAN PATENT APPLICATION

(11) **EP 4 249 113 A1**
(43) Date of publication of application: **27.09.2023**
(21) Application number: 22164485.9
(22) Date of filing: 25.03.2022
(51) Int. Cl.: B01J 20/28, B01J 20/20, B01J 20/18, B01J 20/12, B01J 20/22, B01J 20/10, B01J 41/07, B01J 41/14, B01J 20/32, B01J 20/30, B01J 20/34, B01J 20/08, B01D 46/24, B01D 53/02, B29C 64/00, B33Y 10/00, B33Y 70/00

(54) **A CARBON DIOXIDE CAPTURE STRUCTURE AND A METHOD OF MAKING THEREOF, AND A METHOD FOR REMOVING CARBON DIOXIDE FROM A FLUID**

(71) Applicant: VITO NV, 2400 Mol (BE)
(72) Inventor: Ben, SUTENS, B-2400 Mol (BE); Marleen, ROMBOUTS, B-2400 Mol (BE); Yoran Michel Marc Arielle, DE VOS, B-2400 Mol (BE)
(74) Representative: V.O.

(57) **Abstract**

A carbon dioxide capture structure having a monolith three-dimensional shape, the structure being porous with interconnected pores which are accessible from an exterior side of the structure, wherein the structure is made of a build material comprising a first material and a second material, wherein the first material is a sorbent material and/or a support material (e.g. functionalizable for carbon dioxide adsorption), and wherein the second material is a binder material including potassium silicate. The invention also relates to a method of making said carbon dioxide structure and a method for removing carbon dioxide from a gas or fluid mixture.

## Description

### FIELD OF THE INVENTION

The invention relates to a carbon dioxide capture structure having a monolith three-dimensional shape. The invention also relates a method of making a carbon dioxide capture product. Furthermore, the invention relates to a method for removing carbon dioxide from a gas or fluid mixture. Additionally, the invention relates to a system for removing carbon dioxide from a gas or fluid mixture. Further, the invention relates to a packed bed comprising a plurality of carbon dioxide capture structures.

### BACKGROUND TO THE INVENTION

The emission of greenhouse gases into atmosphere, especially carbon dioxide, is a worldwide acknowledged problem. Throughout the last years, a significant increase in CO₂ emission has been observed which is predominantly caused by human activities including industry, transportation and the use of fossil fuels as an energy source. Since CO₂ emission continues to steadily increase every year, it is considered as the primary driver of climate change and one of the most pressing challenges. Some processes may help reducing the ecological impact of CO₂ by capturing it preventively as well as using it as a building block for fuels, polymers and other valuable chemicals, also known as Carbon Capture, Utilization and Storage (CCUS). CO₂ could be captured directly out of air (Direct Air Capture) as well as out of industrial flue gases.

Typically, CO₂ capture processes involve the use of liquid amine solutions. However, these amines may have several drawbacks including high energy consumption during regeneration, thermal and oxidative solvent degradation and evaporation, as well as formation of corrosion products. Due to these disadvantages, more and more interest is growing towards the separation and adsorption of CO₂ by means of solid porous materials, which show a high selectivity for CO₂ while being able to reduce the energy consumption and amount of waste water significantly.

Three dimensional monolithic porous structures comprising adsorbent particles gained increasing interest as an alternative to conventional sorption systems like packed beds of pellets, beads, or granules. An effective design of the monolith's geometric structure permits improving its overall performance in terms of pressure drop and mass and heat transfer characteristics. Traditionally, monoliths are fabricated using an extrusion process.

Extrusion-based additive manufacturing methods wherein a build material is extruded through a nozzle in the form of filaments, have been developed for the fabrication of three-dimensional monolithic porous structures of widely varying sizes. A desired arrangement of filaments can be obtained by relative movement of the filament with respect to a print surface during filament deposition. Filaments are positioned relative to one another according to a predetermined pattern, thereby providing a structure with desired properties. The lay-down pattern is determined by the print path and has major impact on the properties of the printed structure. In this way, complex geometries and porous structures can be obtained with a fully interconnected network of pores which are of particular interest for application as a sorbent.

Monolithic adsorbents comprising activated carbon, zeolites, and metal-organic frameworks (MOFs) have been considered as adsorbent structures for CO₂ capture. For example, cordierite monoliths wash-coated with a thin layer of 13X zeolite have been investigated experimentally and numerically for CO₂ capture from flue gas. Although the mechanical strength of these coated substrates was found to be reasonably good, the ceramic support did not contribute to CO₂ adsorption, hence limiting the active adsorbent amount per unit volume.

US2019083954 discloses a CO₂ capture material effective at capturing CO₂ from a gas or mixture of gases comprising about 5% or less CO₂. The CO₂ capture material may include at least 80 wt. % of a 13X or a 5A zeolite material and from about 7 to 15 wt.% of one or more binders, typically bentonite clay, methyl cellulose, and any combination thereof. The method for producing such a CO₂ capture material may include mixing zeolite powder, bentonite clay, a plasticizing organic binder, and a co-binder to obtain a powder mixture, and adding distilled water to the powder mixture to form an aqueous paste. The method may further include depositing filaments of the aqueous paste layer-by-layer, using a 3D-printing apparatus, onto a substrate to produce a 3D-printed zeolite monolith. After the monolithic structures are printed, they may be initially dried at room temperature and then be placed into an oven and heated at 100° C to remove the rest of water and allow the polymer linker (PVA) and methyl cellulose to quickly build up high strength and avoid skin cracking. After having been oven dried, the monoliths may be calcined (sintered) at 700° C to decompose and remove the organic content and enhance the mechanical strength.

However, calcination at such high temperatures limits the nature of the materials that may be used as a sorbent, it is energetically disadvantageous and may lead to the formation of cracks or breaking of the structure. Furthermore, calcination may damage the original sorbent material, for example by irreversibly inducing chemical changes.

US10137428B2 discloses dense silica bound zeolite adsorbent particles having an increased volumetric gas adsorption capacity as compared to clay bound zeolite adsorbent particles, for use in a fixed CO₂ sorption bed. The adsorbent particles comprise zeolite powders with a particle size of 1-10 micron, bound with 5-20 wt. % of a silica binder selected from the group consisting of colloidal silica, silicic acid, alkali metal silicate and combinations thereof. The silica binder slurry comprises 15-50 wt. % of silica. The silica binder is in an aqueous slurry, with a pH adjusted to a pH of 3-8 prior to mixing with the zeolite powder. The adsorbent particles are dried at 120°C, followed by calcination at 600°C.

The use of high calcination temperatures limits the nature of the materials that may be used as a sorbent, it is energetically disadvantageous and may lead to crack formation.

There is a desire to manufacture CO₂ capture structures which can capture CO₂ with higher efficiency and/or reliability in order to improve CO₂ removal. Furthermore, there is a need for CO₂ capture structures made of materials resulting in a higher CO₂ adsorption capacity, preferably having a robust design.

### SUMMARY OF THE INVENTION

It is an object of the invention to provide for a method and a system that obviates at least one of the above mentioned drawbacks.

Additionally or alternatively, it is an object of the invention to provide for a carbon dioxide structure with a higher adsorption capacity.

Additionally or alternatively, it is an object of the invention to provide for a carbon dioxide structure which can more effectively and/or efficiently capture carbon dioxide from a gas or fluid mixture.

Additionally or alternatively, it is an object of the invention to provide for an improved method and system for removing carbon dioxide from a gas or fluid mixture.

Additionally or alternatively, it is an object of the invention to provide for a carbon dioxide capture structure with improved mechanical properties and/or robustness.

Additionally or alternatively, it is an object of the invention to provide for a carbon dioxide capture structure with more reliable adsorption properties, even after successive adsorption/desorption steps.

Thereto, the invention provides for a carbon dioxide capture structure having a monolith three-dimensional shape, the structure being porous with interconnected pores which are accessible from an exterior side of the structure, wherein the structure is made of a build material comprising a first material and a second material, wherein the first material is a sorbent material and/or a support material (preferably functionalizable for carbon dioxide adsorption), and wherein the second material is a binder material including potassium silicate.

Advantageously, the build material with potassium silicate as low-temperature binder is a 3D-printable or extrudable CO₂ sorbent, providing high mechanical strength, good chemical and thermal stability, which is suitable for repeated CO₂ ad- and desorption cycles, and shows an improved total CO₂ sorption capacity.

The presence of a potassium silicate binder can lead to a significantly increased sorption capacity for CO₂ in combination with faster kinetics at lower temperatures in comparison with some binder materials such as sodium silicates. Moreover, improved cycling properties can be obtained. The adsorption capacity may be fully restored in repeated adsorption and desorption cycles. In some examples, the CO₂ adsorption capacity may be increased with a factor up to 5, preferably up to 4. As a result, a porous three-dimensional CO₂ monolithic capture structure, with a high CO₂ sorption capacity can be obtained, with a good dimensional stability, which makes it very suitable for manufacturing processes for building 3D monolith porous structures, such as extrusion and 3D printing.

Moreover, the structure can be produced using a power efficient process. More particularly, lower temperatures may be required in the manufacturing process, resulting in less energy consumption. Therefore, the process of making the carbon dioxide capture structure can be made more cost-effective.

The increased sorption capacity has been observed regardless of the observed reduction of the active surface area of the sorbent structure, for example due to a loss in meso- and/or micro-porosity. This increased sorption capacity may be attributed to a dual nature of the sorbent structure, wherein the sorbent material mainly ensures physical or chemical CO₂ adsorption, depending on the adsorbents nature, and the potassium silicate binder adsorbs CO₂ through chemisorption.

Despite a decreased specific surface area and micropore volume of the sorbent material composition, significantly higher sorption capacities were observed in experiments, even after multiple cycles with room temperature regeneration. Active sites require higher temperatures in order to be fully regenerated. The composite material adsorbs CO₂ by a combination of physisorption in the pores of the activated carbon and chemisorption. This chemisorption process most likely involves the conversion of potassium bicarbonate (KHCO₃) to potassium carbonate (K₂CO₃).

The carbon dioxide capture structure can be effectively used for reversible (successive) CO₂ adsorption and desorption cycles. The combination of the first material and second material may provide for a good selectivity for carbon dioxide.

The support material may be functionalizable. However, it is also envisaged to employ a non-functionalized support material, and wherein the sorption is obtained using the potassium silicate binder.

Optionally, the first material and second material have a weight ratio in a range from about 0.8:0.2 to about 0.2:0.8, more preferably from about 0.6:0.4 to about 0.4:0.6.

Advantageously, although the active surface area may decrease by mixing the potassium silicate binder with the sorbent material, experiments indicate that the carbon dioxide adsorption by the structure according to the disclosure is effectively increased. The monolith 3D structure formed by a build material including the first material (cf. sorbent material or support material) and the second material (i.e. potassium silicate binder) can more effectively capture carbon dioxide. The potassium silicate can increase CO₂ sorption capacity and ensure reversible CO₂ adsorption/desorption at moderate temperatures, although other alkali metal silicates may not show reversible CO₂ adsorption/desorption at moderate conditions.

Moreover, the mixture of the first and second materials may be well suited for 3D printing or extrusion for forming a 3D shaped monolith structure. Additionally, an adequate mechanical strength and/or structural stability can be obtained, resulting in a robust structure. Moreover, the stability of structural properties over time, for example after a large number of adsorption/desorption cycles, may be better maintained.

Although the potassium silicate binder itself may have negligible carbon dioxide sorption capacity in bulk form, the adsorption capacity obtained by combining the sorption material (first material) and the potassium silicate binder in the build material can be effectively increased, in some examples by more than 300%, even by more than 400%, compared to the adsorption capacity achievable by the sorbent material alone used in the build material. Additionally, the adsorption capacity can be increased even compared to the sorbent material itself. For example, the first material (e.g. pure activated carbon) may have a limited capacity on its own. By mixing the first material (e.g. pure activated carbon) and the potassium silicate binder, the carbon dioxide adsorption achievable by means of the carbon dioxide structure can be significantly increased in an advantageous way.

The weight ratio of first material (e.g. sorbent material) to second material (i.e. binder) can vary between 80/20 and 20/80. In some cases, an improved printability was obtained for a ratio between 60/40 and 40/60.

It will be appreciated that the above ratios relate to the carbon dioxide capture structure after treatment (cf. drying). Hence, the ratios are indicative of a dry weight percentage.

In some examples, the build material includes less than 50 wt.% binder.

Optionally, the sorbent material is at least one of a carbon based sorbent material, a zeolite sorbent material, a silica-based sorbent material, a clay (mineral or synthetic) sorbent material, an organic polymer or resin sorbent material, or a metal organic framework sorbent material.

For example, adsorbent materials can be distinguished in three categories, based on their adsorption process: (I) Activated carbon and zeolites , in which adsorption mainly involves physisorption, (II) metal-based adsorbents (e.g. Na₂CO₃, K₂CO₃, CaO, ...) and hybrid organic/inorganic sorbents including amine-functionalized inert supports, in which adsorption mainly involves chemisorption and (III) materials such as Metal Organic Frameworks (MOFs) in which adsorption mainly occurs due to both chemisorption and physisorption. Metal-based adsorbents and specifically metal carbonates provide several advantages that make them desirable for carbon capture, including their inexpensiveness, nonvolatility, resistance to degradation and low binding energy with CO₂ enabling an energy-efficient capture process. A combination including the impregnation of potassium carbonate onto activated carbon, can result in high CO₂ capture capacity and uptake (cf. sorption/capture) rate at fairly low temperatures due to the microscopic architecture of the activated carbon powder. The structure according to the disclosure has a 3D monolith shape with inter-connected pores/channel. This can have significant benefits compared to conventional sorbents in powder or pelletized form.

Shaping of these adsorbents by 3D-printing (e.g. 3D robocasting) or extrusion typically includes the addition of a binder, which can act as a rheology modifier and provides strength. Addition of several organic and inorganic binders often require the need for a high-temperature thermal treatment in order to remove the organics and obtain a homogenous fiber network. This typically leads to a loss in specific surface area, porosity and consequently in CO₂ sorption capacity. In order to avoid these challenges, a low-temperature binder which adsorbs CO₂ and contributes to the total sorption capacity could offer a possible solution and could result in the retainment of the total capacity. According to the disclosure, the advantageous low-temperature binder includes potassium silicate.

Various clay materials (e.g. clay minerals) can be used as a first material. Other first materials may also be used.

Optionally, the first material is an amine functionalized sorbent material having amine groups chemically bound to the sorbent material surface.

Optionally, the amine functionalized sorbent material is a non-impregnated material, or in other words the sorbent material is amine functionalized with amine groups chemically bound to the material. The chemical functionalization may result in a higher chemical and/or thermal stability (e.g. less leaching), e.g. at higher temperature and/or in presence of water (e.g. vapor). Additionally or alternatively, the effects of a detrimental shielding of smaller pores by an impregnation layer may be prevented.

It will be appreciated that the term "amine functionalized" is to be understood as having amine groups chemically bound to the sorbent material, instead of impregnating the material and/or providing a coating. For example, a material may be provided which has amine functionalized groups. The material may for instance be a polymer with chemically bound amine groups. The material may also be a silica material to which hydroxy functional groups are bound. Various other materials may also be functionalized with amines.

Optionally, the amine functionalized resin is a crosslinked, macroporous, polystyrene based resin, preferably a benzyl amine-co-polystrene based resin.

Optionally the sorbent material is a polymer sorbent material.

Optionally, the sorbent material is a curable resin. Optionally, the sorbent material is a multi-component curable resin.

It will be appreciated that various amine functionalized resins can be used.

Optionally, the amine functionalized resin is an ion exchange resin. The ion exchange resin may be a weakly basic ion exchange resin. In some examples, the ion exchange resin is a polystyrene polymer based resin, which is crosslinked via the use of divinylbenze, and is functionalized with primary amine groups including benzylamine and wherein the resin is produced by a phthalimide process. The ion exchange resin may be a weakly basic ion exchange resin, or it may be a polystyrene polymer based resin, which is crosslinked via the use of divinylbenze, and is functionalized with primary amine groups including benzylamine and wherein the resin is produced by a phthalimide process.

Porous silica may for example be produced by hydrolysis of silicon alkoxides in alkali solution or by hydrolysis of sodium silicate in acidic solutions. Silica sorbents synthesized using these methods typically have a specific surface area of 300- 600 m²/g. Mesoporous silica's often have a specific surface area of 1000 m²/g or more, they often have an ordered pore structures, tunable over the range 20-100 Å, and are available in a wide range of morphologies such as spheres rods, discs, powders, etc. Examples of commercially available mesoporous silica's include SBA 15, SBA 16, MCM 41, MCM 48, etc. with a wide range of pore geometries (hexagonal, cubic, etc.) and particle morphologies such as discs, spheres, rods, etc.

Zeolites are naturally occurring or industrially produced microporous aluminosilicates also known as "molecular sieves", and mainly consist of silicon, aluminum, oxygen,

Examples of Organic polymers or resin sorbent materials suitable for use with this invention include basic Immobilized Amine Sorbent (silica, zeolite) impregnated with amine functional groups, amines; monoethanolamine; diethanolamine; polyethylenimine (PEI); aminopropyltrimethoxysilane; polyethyleneimine-trimethoxysilane; amide or amine containing polymers including nylon, polyurethane, polyvinylamine, or melamine, ion-exchange resins, for example a benzyl amine-co-polystyrene based ion exchange resin produced by the phthalimide addition process,

MOFs are generally composed of two major components: a metal ion or cluster of metal ions and an organic molecule called a linker. For this reason, the materials are often referred to as hybrid organic-inorganic materials;

Optionally, the carbon based sorbent material includes at least one of an activated carbon, activated coke, activated charcoal, activated carbon fibers, biochars or chars.

If the potassium silicate binder is used with first materials (e.g. zeolites), an increase in the adsorption capacity can be observed. However, providing a carbon based first material, such as for example activated carbon, can result in a significant increase in the adsorption capacity. As a result, in some examples, a carbon based first material may be preferred.

The combination of activated carbon, or other carbon based sorbents, and a potassium silicate binder may provide for significantly increased efficiency in capturing carbon dioxide. For example, activated carbon can be relatively cheap and can provide for a cost-effective carbon dioxide capture structure. In some examples, other carbon based sorbents are used, such as for instance graphene, graphite, etc.

Activated carbon typically has a rather hydrophobic surface and is more likely to adsorb carbon dioxide than water. Zeolites may have a rather hydrophilic surface, resulting in higher affinity for water, which may affect carbon dioxide adsorption. Hence, in some cases, in particular when the fluid may contain water, the use of a carbon based second material may be preferred.

In some examples, activated carbon sorbents are shaped in monolithic/multi-channel systems by using potassium silicate as low-temperature binder. The porous structure can be manufacture by 3D printing, extrusion, or the like. The structure may for example be a beam-like monolithic structured printed sorbent. The structure according to the disclosure has improved CO₂-capture performance and beneficial required temperature for active-site regeneration. A mechanically stable activated carbon sorbent with increased carbon capture performance can be obtained, even when a room temperature regeneration for example by N₂ purging is applied. Although the CO₂ uptake may slightly drop after several cycles due to incomplete recovery at room temperature, a capacity increase of at least 25% was observed in comparison with the original activated carbon powder in various exemplary experiments.

In various exemplary experiments, an optimization of the CO₂ desorption step was performed by increasing the regeneration temperature up to 150°C to improve the recovery of the active sorbent. This resulted in a CO₂ uptake of the composite material of 0.76 mmol/g, almost tripling the working capacity of the original activated carbon powder (0.28 mmol/g). An in situ XRD study was carried out to confirm the proposed sorption mechanism, indicating the presence of potassium bicarbonates and confirming the combination of physisorption and chemisorption in the composite.

Optionally, the binder material includes at least 40 wt.% of potassium silicate, preferably at least 50 wt.%, more preferably at least 60 wt.%, even more preferably at least 80 wt.%, most preferably at least 90 wt.%.

Optionally, the potassium silicate binder can be a water based solution or a powder. Optionally, the binder includes oxides and hydroxides of (especially) K and Si with a molar ratio of Si:K between 1:1 and 5:1, more preferably between 2:1 and 3:1. With possible impurities of Na, Li, Ca, Mg with an impurity:K ratio smaller than 2.5:100, more preferably smaller than 1:100.

Optionally, the sorbent material, such as for instance the carbon based material, is further functionalized with functional groups. In this way, the carbon dioxide adsorption capacity can be further improved.

The support material (e.g. alumina, silica, etc.) can act as a carrier for sorbent material. In some cases, the support material functionalized with amine functional groups may be sensitive for high temperatures. However, advantageously, by employing a potassium silicate binder, the need for such high temperatures can be effectively avoided. Additionally, the potassium silicate binder may increase the mechanical strength of the formed structure when treated at lower temperatures. Treatment of the formed structure at relatively high temperatures, such as for instance higher than 150 degrees Celsius, may advantageously not be required.

Optionally, the support material is functionalized with amine functional groups. The support material may be functionalized with different functional groups.

Optionally, the support material is at least one of alumina or silica functionalized with amine functionalized groups.

Optionally, the monolith porous structure comprises multiple parts connected to each other. For example, the 3D shaped structure may have multiple walls and/or filaments connected to each other in order to form a porous structure with intra-structure pores, channels and/or openings. In some examples, the monolith porous structure is manufactured by means of filament extrusion (cf. 3D printing, robocasting, micro-extrusion or direct ink writing). However, other manufacturing processes may also be used. For example, the monolith structure may be formed by extrusion in a mold or the like. The structure itself may have various porous 3D shapes, such as for instance a honeycomb structure, a lattice structure, a meshed structure, etc. At least one side of the structure has interconnected pores (e.g. channels) which are accessible from an exterior side of the structure.

Optionally, the monolith carbon dioxide capture structure is a monolithic structure with structured porosity. For example, the carbon dioxide capture structure may be a honeycomb structure, a meshed 3D structure or a lattice structure.

It will be appreciated that the monolith 3D shaped carbon dioxide capture structure of the disclosure does not encompass pellets, beads or granules. Typically, such elements are packed in a bed, which can result in high pressure drops, inefficient use of active material and increased attrition. Therefore, monolithic structures show great potential due to a uniform flow pattern resulting in low pressure drop and improved heat- and mass transfer. In contrary to coating of a monolithic inert support, additive manufacturing, 3D-printing, or extrusion enables the development of an optimal porous structure with a specific design, fitted to the application while showing a high sorbent loading per volume material.

Optionally, the structure comprising a porous arrangement of build material with intra-structure pores.

In some examples, the monolith structure is manufactured by means of a 3D printing process or an extrusion process. The interconnected pores/openings (e.g. channels) of the structure may be accessible from one or more outside/exterior regions of the structure. In this way, the pores/openings formed in the structure can receive gas/fluid mixture containing carbon dioxide.

Optionally, the structure comprises interconnected filaments of build material printed in a plurality of stacked layers, wherein the filaments of the consecutive layers are connected to one another to obtain a porous arrangement with intra-structure pores formed between filaments.

The structure of the disclosure provides significant advantages for capturing carbon dioxide. An adequate viscosity can be obtained for forming a stable build material and in order to ensure shape and dimensional stability, and in order to permit conversion of build material in a 3D monolith shape with interconnected intra-structure channels/pores. This viscosity can be steered by adapting the solvent/water content during manufacturing.

Advantageously, the build material may only require a drying treatment step. The temperatures used in CO₂ desorption step are sufficient to achieve drying and binder curing, hence no calcination is required. Absence of calcination is energetic advantage, provides dimensional stability, minimizes risk to shrinking and crack formation.

Optionally, the structure is manufactured by means of at least one printing nozzle configured to deposit a paste of build material in an interconnected arrangement in order to form the 3D monolith porous structure. Optionally, the nozzle has a diameter at least 5 times larger than the D90 particle size (i.e. 90% of the particles has a diameter lower than this value) of the solid particles in the paste of build material, preferably at least 7 times larger, for example 10 times larger. Optionally, the paste of build material has particle sizes smaller than 45 micrometer.

The build material (e.g. paste, suspension, etc.) can be extruded through a nozzle for three-dimensional filament deposition. The deposited filaments can form a layered network. The layers may for instance be successively printed on top of each other, resulting in a structure formed by a stack of successive layers. The filaments are spaced apart with respect to each other in order to define channels therebetween. A porous structure with pores can thus be obtained in this way.

The layerwise deposition of the filaments may include extruding a material through a deposition nozzle to form the filaments while moving the deposition nozzle relative to the print bed. The nozzle can be moved with respect to the print bed, and/or vice versa. Hence, kinematic inversions are also envisaged.

Optionally, the structure has at least two stacked layers, more preferably at least three stacked layers, even more preferably at least four stacked layers.

The structural geometry of the porous structure can be determined by the position and orientation of individual filaments. Filaments may for example be oriented at 0° and 90° on alternate layers. This arrangement is also known as "0/90 orientation". However, many other arrangements are possible, for instance 0/60/120 orientation in which filament orientations are changed by 60° on each subsequent layer. For porous structures with a 0/90 filament orientation, porosity can be considered as a series of long intersecting columnar pores. Alternatively, pores may more closely resemble the geometry of a spiral staircase for a 0/60/120 filament orientation. Many other filament orientations are possible resulting in different pores of the porous structure.

Other aspects of filament positioning can also be varied. For instance, the filaments can be aligned or staggered. In an aligned arrangement of filaments, the filaments are aligned directly above similarly oriented filaments on lower layers. In a staggered arrangement of filaments, the filaments are staggered in an alternating manner by off-setting their horizontal position. These filaments form offset layers and/or diagonal pores. Furthermore, it is also possible that several identical layers are printed before the filament orientation is changed.

Various different deposition techniques may be employed as the manufacturing process for the porous structure. For example, a 3D model can be imported into an additive manufacturing computer program product. This computer program product may perform a computer implemented method configured to generate a print path, wherein an overall model is converted into layers and for each single layer a print path is determined along which the fibers are deposited.

Design parameters such as filament gap, filament diameter and lay down angle play significant roles in controlling porous and mechanical characteristics. For instance, increasing the lay down angle can also increase the porosity which can influences the mechanical properties of the porous structure. By locally providing a customized or adapted printing arrangement the preselected one or more frangible regions can be included in the porous structure to be manufactured.

Optionally, a material extrusion additive manufacturing process is employed in which a material is deposited continuously in a chosen arrangement.

Optionally, the carbon dioxide capture structure is made of a foam build material. For example, a foam material may be extruded in order to form a 3D monolith structure. Various foaming agents can be used.

According to an aspect, the invention provides for a method of making a carbon dioxide capture product, the method including: providing a first material, wherein the first material is a sorbent material and/or a support material(preferably functionalizable for carbon dioxide adsorption); providing a second material, wherein the second material is a binder material including Potassium silicate; providing a solvent, such as water; mixing the first material, second material and the solvent to produce a sorbent mixture; building a monolith three-dimensional porous structure using the sorbent mixture as build material; and treating the monolith three-dimensional porous structure so as to obtain the carbon dioxide capture product; and wherein the treating including drying with a maximum temperature of 150 °C.

Since the heat treatment may be carried out at a low temperature, there is a minimal risk to decomposing or partly decomposing the first material (cf. sorbent material) and a wide variety of first materials (cf. sorbent materials) may be used.

The solvent may be a water-based liquid. However, it is also possible to use an alcohol, or a water-alcohol mixture. In some preferred embodiments, a water-based solvent may be preferred. The solvent may be removed upon drying (cf. treating), which can be performed at relatively low temperatures.

The low temperature heat treatment can ensure at least one of:
- A maintenance of the dimensional stability of the three-dimensional structure (absence of shrinkage). Upon solvent/water removal, the silicate adheres to the sorbent surface and the shape is fixed. As a result mechanical strength is developed upon drying already, i.e. at low temperature.
- A shape maintenance. This is very important when designing specific structures to minimize pressure drop.
- A minimal risk to the formation of cracks or breaking of the structure.
- A high mechanical strength.
- A good thermal and chemical stability.

Optionally, the treating includes drying without performing any subsequent calcination steps.

It will be appreciated that the mixing may be carried out in one or more steps. Furthermore, if mixing is carried out in multiple steps, the order of the mixing steps can be changed. For example, the solvent and the second material may be mixed, and subsequently the first material may be added. However, various other mixing orders can be employed, for instance involving first mixing the first and second materials and subsequently adding the solvent.

Optionally, the binder material is a solution or dispersion of potassium silicate in a liquid. The liquid may for instance be solvent such as water.

The potassium silicate binder may be employed in a liquid state (e.g. aqueous solution or dispersion). However, it is also envisaged that the potassium silicate binder may be employed in a solid state. For example, a powder of potassium silicate binder may be used. In some examples, the powder can be dissolved in a solvent such as water. Such an approach may provide more flexibility in tuning the solvent content, and thus the resulting viscosity. The viscosity may play a significant role in the method of making the carbon dioxide capture product, for example including 3D printing the sorbent mixture, extrusion of the sorbent mixture.

When the formed structure is dried, moisture (cf. water) evaporates, and the silicate can solidify on the surface of the material of the structure. By mixing the potassium silicate with a solvent, a solution or dispersion can be obtained, which can result in a more homogeneous distribution of potassium silicate over the first material. However, it is also envisaged to use potassium silicate binder material in solid form (e.g. powder). Then, afterwards, a solvent (e.g. water) can be added in order to obtain a solution/dispersion when mixing the binder with the first material.

Optionally, treating includes drying the formed porous structure at a temperature ranging from 60 °C to 120 °C, more preferably 75 °C to 110 °C.

The treating may include a drying step at relatively low temperatures, preferably less than 150 °C, more preferably less than 140 °C, even more preferably less than 130 °C. In some examples, the drying is performed with temperatures in a range of 70 °C to 120 °C such as to convert potassium silicate to silica and get a binder effect. No subsequent heat treatment at higher temperatures may be required (e.g. calcination at higher temperatures). In some examples, the drying is performed with a temperature in a range of 80 °C to 110 °C, preferably 90 °C to 100 °C. Using the build material according to the invention can effectively prevent heat treatment with temperatures higher than 150 °C.

In some examples, treating involves thermal treatment.

Optionally, the monolith three-dimensional porous structure is built layer by layer employing a three-dimensional printing process.

Mixing the first material, second material and solvent may provide for a viscous composition. The viscous composition may be arranged in a monolith 3D shape. In some examples, the amount of solvent is chosen such as to obtain a viscosity adequate for 3D printing and/or extrusion for producing the monolith 3D structure. The treatment may be carried out for drying the formed monolith structure, so that moisture (e.g. water) can be removed. Advantageously, the drying process can be effectively carried out at low temperatures, such as for instance around 60°C. When sufficient water has evaporated, a solid monolith carbon dioxide capture structure is obtained.

According to an aspect, the invention relates to a method for removing carbon dioxide from a gas or fluid mixture, the method comprising: bringing the gas or fluid mixture in contact with a carbon dioxide capture structure; and capturing at least a portion of the carbon dioxide in the gas or fluid mixture in the carbon dioxide capture structure; and wherein the carbon dioxide capture structure has a monolith three-dimensional shape, the structure being porous with interconnected pores which are accessible from an exterior side of the structure, wherein the structure is made of a build material comprising a first material and a second material, wherein the first material is a sorbent material and/or a support material (preferably functionalizable for carbon dioxide adsorption), and wherein the second material is a binder material including potassium silicate.

The use of potassium silicate as a binder for forming the build material can result in beneficial adsorption capacities obtained by the carbon dioxide capture structure. Moreover, an effective desorption can be obtained at relatively low temperatures. For example, if sodium silicate or lithium silicate is used as binder, the reactions may take place at much higher temperatures. Hence, employing a potassium silicate binder has significant advantages for adsorption and desorption processes, especially compared to other types of binders such as sodium silicate and lithium silicate. Much higher temperatures may be needed for performing effective adsorption and desorption steps for other binders.

Various sorbent materials can be used, such as for example carbon based materials, inorganic materials, MOFs. An number of exemplary, non-limiting sorbent materials are: activated carbon, activated coke, activated charcoal, activated carbon fibers, biochars, chars, zeolites and other molecular sieves, silica sorbents, etc.

In some preferred embodiments, an activated carbon(-based) material is employed. Because of hydrophobic nature, penetration of binder into pore system is minimized and high accessible surface remains. A carbon dioxide containing gas may contain a relatively large amount of moisture or water. Because of hydrophobic nature, CO₂ sorption is promoted over H₂O sorption. With zeolites, more hydrophilic surface permits penetration and adsorption of binder into the pore system, which may lead to a reduction of the active surface available for CO₂ sorption in some cases. Hence, by employing carbon(-based) material as the first material, it can be prevented that CO₂ sorption is hindered by H₂O sorption, and thus no additional drying of the fluid/gas in advance (i.e. pre-processing step) may be required. Furthermore, there is only a minor decrease in density when combining the binder with the activated carbon powder, leading to a volumetric capacity of 1.14 mmol/cm³ when compared to pure activated carbon powder with a capacity of0.52 mmol/cm³.

Optionally, the build material has 20-80 wt. % potassium silicate binder material, preferably 30-70 wt. %, more preferably 40-60 wt. % for enabling adequate building of the monolith 3D structure, for example using 3D printing or extrusion. Such quantities may better ensures that a dimensional and/or a mechanic stability is maintained throughout adsorption/desorption cycles, even at temperatures needed to ensure full CO₂ desorption.

Advantageously, the structure may require relatively low thermal treatment temperatures. Optionally, the thermal treatment temperatures are in a range of 50-150°C, preferably 60-120°C, more preferably 75-110°C, most preferably 90-100°C.

Optionally, one or more successive cycles are performed, each cycle involving an adsorption step and a subsequent desorption step, wherein carbon dioxide in the gas or fluid mixture is captured in the carbon dioxide capture structure in the adsorption step, and wherein the carbon dioxide captured in the carbon dioxide capture structure is released in the desorption step, wherein the desorption step is carried out at room temperature, preferably at an elevated temperature, wherein the elevated temperature is greater than 60 °C, preferably greater than 80 °C, even more preferably greater than 100 °C, and wherein the adsorption step is carried out at a pressure in a range of 1 to 35 bar, preferably 1 to 10 bar, and wherein the desorption step is carried out at a pressure in a range of 20 mbar to 1 bar, preferably 100 mbar to 1 bar.

Advantageously, a significant increase in adsorption capacity can be obtained by employing a build material including the first material and the potassium silicate binder material.

In some examples, the adsorption step is carried without performing a heating step (e.g. at a room temperature), and the desorption step is carried out by performing an optional heating step for bringing the structure to an elevated temperature. The desorption step can be carried out at room temperature or an elevated temperature higher than 60 degrees Celsius, for example higher than 80 degree Celsius, or for example higher than 100 degrees Celsius.

In some examples, the desorption step is carried out at a desorption temperature which is adequate for making the carbon dioxide structure ready for a subsequent adsorption step. It has been experimentally observed, that the desorption can advantageously be carried out even at room temperature. In some cases, the desorption step is carried out at relatively low elevated temperatures for improving the desorption, and thus enabling more effective adsorption at the subsequent adsorption step.

Although desorption may even be carried out at room temperature in some examples, in some examples, at lower temperatures such as room temperature, a loss of capacity may be obtained as a result. Desorbing at higher temperatures may mitigate this effect, as potassium carbonate decomposition can proceed better over time, which can better ensure a decent adsorption capacity. In some examples, desorption at elevated temperatures above 150 °C may result in no or only negligible detrimental effects on the adsorption capacity in the subsequent adsorption step.

It will be appreciated that instead of performing temperature swings, it is also envisaged to, additionally or alternatively, perform pressure swings (e.g. varying pressure during the desorption step).

The method can be used for capturing carbon dioxide in industrial gases (e.g. having low concentrations of carbon dioxide, such as for instance below 15 percent). However, the structures can also be used to selectively extract carbon dioxide from a biogas, for example to produce methane. Such biogas may include higher concentrations of carbon dioxide. The adsorption capacity of structure may increase at higher carbon dioxide concentrations in the to be treated fluid/gas. In some examples, the first material is carbon based (e.g. activated carbon) and the gas or fluid mixture comprises at least 5%, preferably at least 10% carbon dioxide.

The structure according to the disclosure can also be used for capturing carbon dioxide in low concentration gasses or fluids. In some examples, the gas or fluid mixture comprises 10% or less carbon dioxide, for example 5% or less carbon dioxide.

According to an aspect, the invention provides for a system for removing carbon dioxide from a gas or fluid mixture, comprising: a compartment with one or more carbon dioxide capture structures according to the disclosure placed therein; and a guiding unit configured to at least partially flow the gas or fluid mixture through intra-structure pores of the one or more carbon dioxide capture structures placed within the compartment.

Optionally, the sorbent structure is manufactured by means of 3D printing, filament deposition manufacturing, extrusion or robocasting. In some examples, for carbon dioxide adsorption relatively high volumes of fluid are to be guided along the carbon capture structure. By employing monolithic 3D shaped carbon dioxide capture structures, for example obtained by performing 3D printing, extrusion, robocasting, or the like, a relatively low pressure drop and adequate kinetics can be obtained. The mixture of the first and second material is suitable for manufacturing 3D monolithic structures with interconnected pores (e.g. lattice structure).

According to an aspect, the invention provides for a use of a carbon dioxide capture structure according to the disclosure for removing at least carbon dioxide from a gas or fluid mixture.

According to an aspect, the invention provides for a method for producing a porous three-dimensional CO₂ monolithic sorbent structure, the method comprising depositing interconnected filaments of a build material in a predetermined arrangement in a plurality of consecutively stacked layers, and subjecting the thus obtained structure to a heat treatment, wherein the build material comprises particles of a porous sorbent material, a binder and a solvent, wherein the binder is potassium silicate and wherein the heat treatment is carried out at a maximum temperature of 150°C.

The build material may for example be used in a 3D printing process (e.g. filament deposition, robocasting, extrusion-based additive manufacturing, etc.). However, other manufacturing processes may also be employed. For example, the structure may be manufactured by means of extrusion.

For example, pure activated carbon may have a limited capacity. With the potassium silicate binder, the carbon dioxide adsorption achievable by means of the carbon dioxide structure can be significantly increased.

It will be appreciated that exterior side of the structure may be a periphery of the structure. The periphery may extend along an outer edge of the structure.

The monolith carbon dioxide capture structures according to the disclosure can be used in other devices or systems. For example, a bed or enclosure may be employed having a plurality of monolith structures (i.e. not beads) arranged therein, in a structured or unstructured manner. The pressure drop over a packed bed of beads can be relatively high. Advantageously, the pressure drop can be reduced by employed a packed bed of 3D monolith structures according to the disclosure.

According to an aspect, the invention relates to a packed bed of carbon dioxide capture structures according to the disclosure, or which are obtained by performing the method according to the disclosure. The structures may have the same or different monolith 3D shape. Furthermore, the structures may have the same or different dimensions, geometries, characteristics, etc.

Optionally, multiple carbon dioxide capture structures are arranged in an structured arranged within the bed. For example, the structures can be arranged next to each other and/or on top of each other in a carbon dioxide capture device comprising such bed. The structures can be stacked in different ways. Various structured configurations of monolith structures are envisaged.

It will be appreciated that terms like "binder", "glue" and "adhesive" may be used interchangeably referring to the potassium silicate material (cf. second material).

"Optional" or "optionally" means that the subsequently described event or circumstance may or may not occur, and that the description includes instances where said event or circumstance occurs and instances where it does not.

It will be appreciated that, unless otherwise specified, the use of the ordinal adjectives "first", "second", "third", etc., to describe elements, merely indicate that different instances of elements are being referred to, and are not intended to imply that the elements so described must be in a given sequence, either temporally, spatially, in ranking, weight percentage, or in any other manner.

It will be appreciated that the order in which various described method steps are performed may be changed, and in some alternative embodiments one or more method steps may be skipped altogether.

It will be appreciated that any of the aspects, features and options described in view of the carbon dioxide capture structure apply equally to the methods and systems of the disclosure. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a carbon dioxide capture structure;
Fig. 2 shows a schematic diagram of an embodiment of a method;
Fig. 3 shows a schematic diagram of an embodiment of a method;
Fig. 4 shows an exemplary spectrum;
Fig. 5 shows an exemplary chart;
Fig. 6 shows an image of an exemplary embodiment of structures;
Fig. 7 shows an microscopy image of an exemplary structure;
Fig. 8 shows an exemplary graph;
Fig. 9 shows an exemplary graph;
Fig. 10 shows an exemplary chart;
Fig. 11 shows an exemplary chart;
Fig. 12 shows exemplary graphs; and
Fig. 13 shows an exemplary chart.

### DETAILED DESCRIPTION

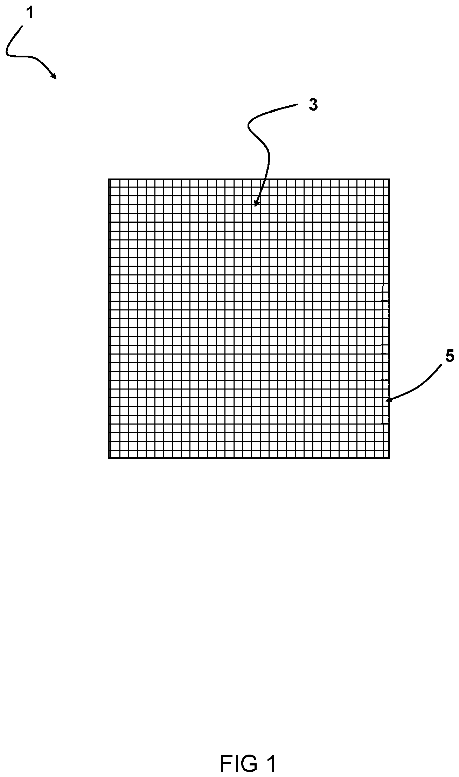

Fig. 1 shows a schematic diagram of a top view of an embodiment of a carbon dioxide capture structure 1. The structure 1 has a monolith three-dimensional shape. The structure 1 is porous with interconnected pores 3 which are accessible from an exterior side 5 of the structure 1. The structure 1 is made of a build material includes a mixture of a first material and a second material, wherein the first material is a CO₂ sorbent material and/or a support material, and wherein the second material is a binder material including potassium silicate.

Advantageously, using a carbon based first material (e.g. activated carbon ) and potassium silicate binder material can result in a strong synergistic effect. For example, activated carbon on its own may have a relatively low adsorption capacity, and the potassium silicate binder on its own may have a negligible adsorption capacity (cf. the potassium silicate binder itself may not adsorb carbon dioxide). However, building the structure based on a mixture of a carbon based material and a potassium silicate binder may significantly increase the adsorption capacity, whilst also providing advantageous processing capabilities related to (post-)treating of the formed structure (cf. low temperature drying) and/or adsorption/desorption processing conditions (e.g. low temperature).

The monolith structure can be used for removing carbon dioxide from a gas mixture, even if the gas mixture contains a relatively low concentration of carbon dioxide, for example less than 10 percent. In some examples, the gas mixture may contain other components, such as water. The functional groups in a carbon based first material (e.g. activated carbon) and its specific surface can enable effective carbon dioxide adsorption.

Advantageously, by employing the potassium silicate binder, the formed 3D carbon dioxide carbon structure does not require calcination at high temperatures (e.g. above 500 °C, for example about 700 °C).

In some examples, the first material is a carbon based material, a zeolite, a clay material (e.g. clay mineral or synthetic clay), or a material with amine functional groups, such as for instance an amine functionalized polymer/resin or organic polymer/resin. Additionally or alternatively, the first material may be a support/carrier material such as silica, alumina, etc. which is functionalizable with functional groups. For example, the support/carrier material may be functionalized with amine functional groups. For example, materials with amine groups may lose essential functionality as a result of elevated temperatures above a certain threshold. Advantageously, the invention according to the disclosure effectively enables avoiding such damage temperatures.

Different types of porous structures can be manufactured. Such structure may represent a mesh, a lattice structure, a filament network, a scaffold, a filament framework, or the like. Many types of arrangements and structures are possible. The specific arrangement, configuration and/or dimensions of the structure may be selected and designed in different ways.

The structure may be shaped using various shaping or manufacturing techniques, such as for example 3D printing, robocasting, filament deposition, extrusion, etc.

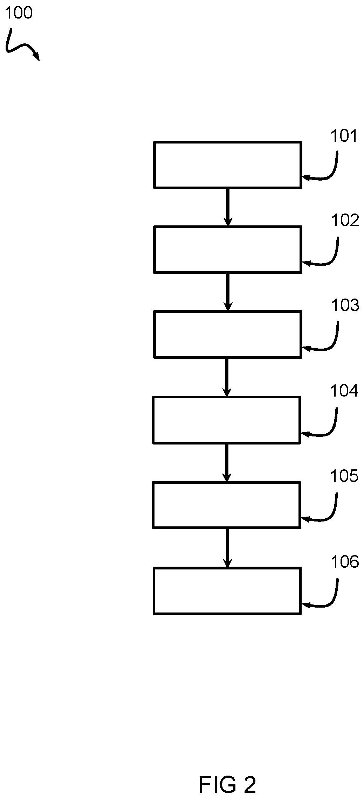

Fig. 2 shows a schematic diagram of an embodiment of a method 100 of making a carbon dioxide capture product. In a first step 101, a first material is provided, the first material being a sorbent material and/or a support material (e.g. functionalizable for carbon dioxide adsorption). In a second step 102, a second material is provided, the second material being a binder material including Potassium silicate. In a third step 103 a solvent such as water is provided. In a fourth step 104, the first material, second material and the solvent are mixed in order to produce a sorbent mixture. In a fifth step 105, a monolith three-dimensional porous structure is built using the sorbent mixture as build material. In a sixth step 106, the monolith three-dimensional porous structure is treated so as to obtain the carbon dioxide capture product, wherein the treating includes drying with a maximum temperature of 150 °C.

Advantageously, the method does not require any high temperature thermal treatment. The heat treatment can be carried out without exceeding a maximum temperature of 150 °C. A low temperature (heat) treatment can result in a more efficient and cost-effective process. Various heat treatment steps can be carried out, whilst the treatment temperature is kept below 150 °C.

In some examples, a drying temperature lower than 130 °C may be employed. For example, the drying temperature may be in a range of 80-110 °C. Such relatively low temperatures may be sufficient for obtaining the binding effect of potassium silicate and make the surface of the build material available for carbon dioxide adsorption. In some examples, a freeze-drying treatment step is carried out.

The solvent may ensure that the potassium silicate binder remains soluble. A fine distribution of potassium silicate on the first material (e.g. activated carbon) may ensure beneficial carbon dioxide sorption by the carbon dioxide capture structure. Using a solution or dispersion of the binder material may thus result in a fine distribution of potassium silicate on the first material. Due to an improved distribution of the potassium silicate binder, adsorption and kinetics of the manufactured carbon dioxide capture structure may be significantly improved. However, this effect may also be obtained by adding a solvent during mixing of the first and second materials.

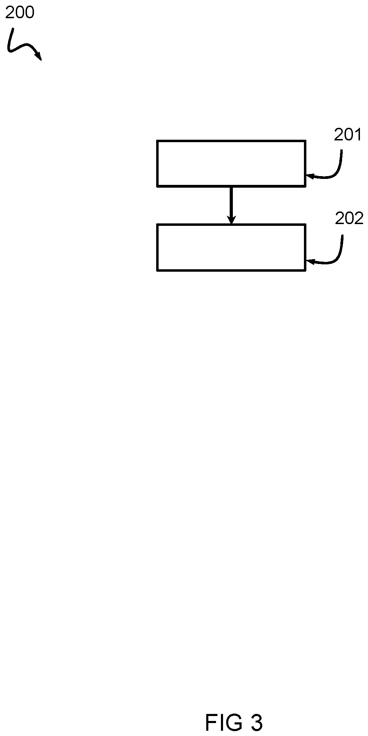

Fig. 3 shows a schematic diagram of an embodiment of a method 200 for removing carbon dioxide from a gas or fluid mixture. In a first step 201, the gas or fluid mixture is brought in contact with a carbon dioxide capture structure, wherein the carbon dioxide capture structure has a monolith three-dimensional shape, the structure being porous with interconnected pores which are accessible from an exterior side of the structure, wherein the structure is made of a build material comprising a first material and a second material, wherein the first material is a sorbent material and/or a support material (e.g. functionalizable for carbon dioxide adsorption), and wherein the second material is a binder material including potassium silicate. In a second step 202, at least a portion of the carbon dioxide in the gas or fluid mixture in the carbon dioxide capture structure is captured.

### Examples

Below experimental results are described for potassium silicate as low-temperature binder in 3D-printed porous structures for CO₂ separation. It will be appreciated that other manufacturing processes, such as extrusion, may also be employed.

A commercial potassium silicate solution is combined with activated carbon and subsequently shaped by 3D micro-extrusion. However, other manufacturing techniques may be employed for building the carbon capture structure according to the disclosure. After shaping, the aqueous silicate solution can transition to a carbonate described by the following reactions:
*Transition from silicate to carbonate*

   *K₂SiO₃* + *2CO₂* + *H₂O* ↔ *2KHCO₃* + *SiO₂*
*Desorption reaction*

   *2KHCO₃* + *0,5 H₂O ↔ K₂CO₃.1,5H₂O* + *CO₂*

   *2KHCO₃* ↔ *K₂CO₃* + *H₂O* + *CO₂*
*Adsorption reaction*

   *K₂CO₃.1,5H₂O* + *CO₂*↔*2KHCO₃* + *0,5 H₂O*

   *K₂CO₃* + *CO₂* + *H₂O* ↔ *2KHCO₃*

This results in a structured hybrid adsorbent, combining chemisorption and physisorption, avoiding the need of a high-temperature thermal treatment and providing high mechanical strength, good chemical and thermal stability while retaining or improving the total CO₂ capacity. The use of potassium silicate as binder for building a 3D shaped monolith carbon dioxide capture structure provides significant advantages. The build material is well suited for 3D printing, extrusion, or the like. Moreover, potassium typically shows higher sorption capacity as well as faster kinetics at lower temperatures in comparison with sodium silicates, enabling a new type of regenerable chemical absorbents.

### Paste preparation and monolith printing

The 3D-printing paste was prepared by a mixture of Activated Carbon powder, a potassium silicate binder and distilled water. Using an ARE Thinky mixer, the different components were mixed in several ratios to obtain a printable paste, while providing high mechanical strength and a maximized total CO₂ capacity. Subsequently, the paste was loaded into a syringe and extruded by using a mechanically driven piston, mounted on a CNC machine. A constant volume flow was ensured by the piston, extruding fibers through a nozzle of 600 µm. Squared monolithic-type structures were constructed layer by layer until a beam of 5 cm height and 2 cm diameter was obtained. The distance between each fiber in a layer was kept at 600 µm while each successive layer was rotated with 90°. After printing, the structures were dried using a Thermo Scientific Heratherm at 94°C for 8 hours to obtain a mechanically strong printed monolith. No additional high-temperature thermal treatment was performed.

### Adsorbent characterization

Characterization of the adhesive was performed in terms of Fourier Transform - Infrared spectroscopy and Inductively Coupled Plasma spectroscopy. Specific surface area and micropore volume determination of the 3D-printed adsorbent were analyzed from N₂ isotherms at liquid nitrogen temperatures (77K). Sample activation was performed overnight at 120°C under vacuum. Mercury Intrusion Porosimetry was performed. The pore sizes were calculated using a contact angle of 140° and a surface tension of 480 Dynes/cm. He pycnometry was determined. X-Ray Diffraction measurements were carried out. Phase identification was carried out. Scanning Electron Microscopy was performed. The CO₂ capacity of the composite sorbents were evaluated.

### Results and discussion

### Characterization of commercial adhesive

Characterization of the commercial adhesive was performed in terms of Fourier-Transform infrared spectroscopy (FT-IR).

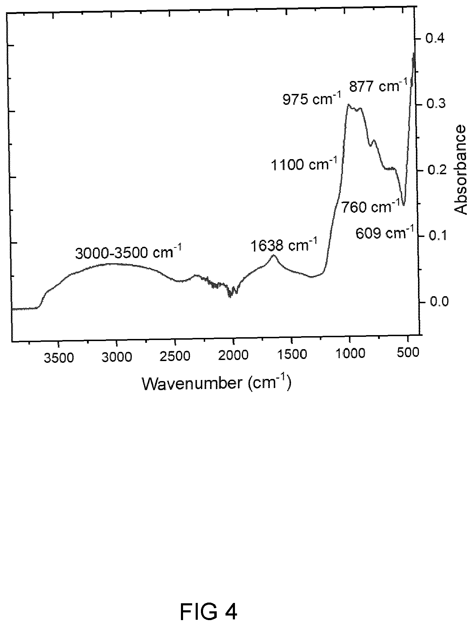

Fig. 4 shows a FT-IR spectrum of a silicate adhesive, measured in crushed powder-form. The FT-IR spectrum of the pure silicate adhesive, which was dried at 94°C overnight prior to crushing of the sample to perform the analysis, is shown.

The silicate adhesive presented several characteristic vibration bands between 500 and 1100 cm⁻¹, confirming the nature of the binder. The presence of silicate and silica functionalities is acknowledged by the vibration bands detected at 609 cm⁻¹, 760 cm⁻¹, 877 cm⁻¹, 975 cm⁻¹ and 1100 cm⁻¹ corresponding to the Si-O, Si-O-Si, Si-O, Si-OH and Si-O-Si vibration respectively. Moreover, a broad band between 3000 cm⁻¹ and 3500 cm⁻¹ and a peak at 1638 cm⁻¹ is observed, confirming the presence of hydroxyl functionalities and/or adsorbed water molecules at the silicate surface.

Additionally, inductively coupled plasma (ICP) spectroscopy was performed to analyze the nature of the silicate adhesive in terms of counterions, which largely influences the total CO₂ capacity, the kinetic behavior as well as regeneration temperature. ICP confirmed the presence of a mixture of potassium and sodium counterions, with potassium as the dominant species in a concentration of 74.7 g/L in comparison with sodium at 0.43 g/L. The concentration of silicium in the adhesive solution was equal to 129 g/L resulting in a total Si/K+Na weight ratio of 1.72.

### Additive manufacturing of monolithic sorbents

In a next step, the silicate adhesive was combined with an activated carbon powder in different ratios to develop a suitable paste composition for 3D-printing. The activated carbon/adhesive ratio was varied between 70/30 and 40/60 to evaluate and balance the printability, mechanical strength of the sorbent after printing and the effect on the CO₂ sorption capacity.

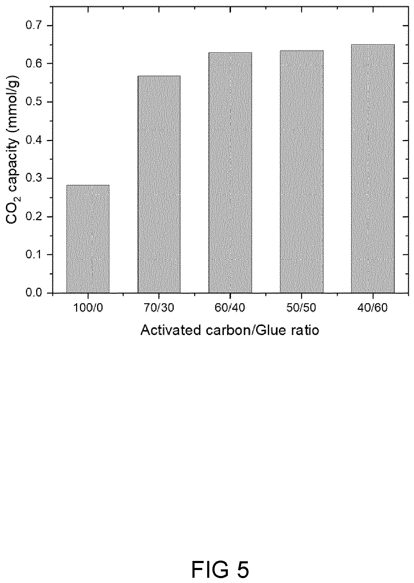

Fig. 5 illustrates an effect of activated carbon/glue ratio on the total CO₂ capacity at 10% CO₂, analyzed by TGA. As observed in Fig. 5, a large improvement in CO₂ capacity is observed when adding more binder (i.e. adhesive, glue) to the activated carbon material. At a 70/30 ratio between activated carbon and adhesive, the CO₂-capacity doubles from 0.28 mmol/g for the activated carbon powder to 0.57mmol/g for the composite. The mechanical strength at this ratio may be less suitable to self-support a printed structure, and more adhesive may be needed to achieve the necessary mechanical strength. However, each increase in the amount of aqueous adhesive solution may significantly decreases the viscosity of the mixture, which can negatively affect the printability. Ratios higher than 50/50 may therefore in some examples be unsuitable for printing. To achieve a balance between final mechanical strength and printability, an optimum can be selected by combining the activated carbon with the adhesive in a 50/50 ratio. At this ratio, an excellent CO₂ capture capacity of 0.62 mmol/g has been observed.

To take into account the effect of the glue on the density and volumetric capacity of the composite material, the density of the cured and dried adhesive, the pure activated carbon powder and the selected 50/50 ratio composite (cured and dried) was determined by He-pycknometry. The respective results are 2.019 g/cm³ (adhesive), 1.869 g/cm³ (AC powder) and 1.817 g/cm³ (composite). These results indicate a very minor decrease in density when combining the glue with the activated carbon powder, resulting in the observation of a similar trend in terms of the volumetric capacity of the composite material compared to the CO₂-capacity based on weight (activated carbon powder 0.52 mmol/cm³ versus 1.14 mmol/cm³).

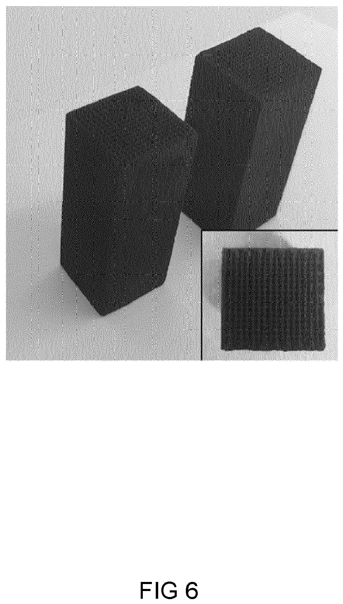

Fig. 6 shows images of the 3D-printed activated carbon/silicate adhesive composites. After drying, the final monoliths display a height of 4.8 cm and diameter of 1.8 cm. The optimized paste formulation was loaded into a syringe and 3D-printed into monolithic-type structures using a 600 µm nozzle. The printed monoliths were subsequently transferred to the drying furnace at 94°C for at least 8 hours to remove excess moisture and to achieve mechanically strong sorbent monoliths. No significant shrinkage (<10%) or deformation was observed during the low-temperature treatment, preserving the overall shape and structure of the composite. The final monoliths are depicted in Fig. 6.

### Adsorbent characterization

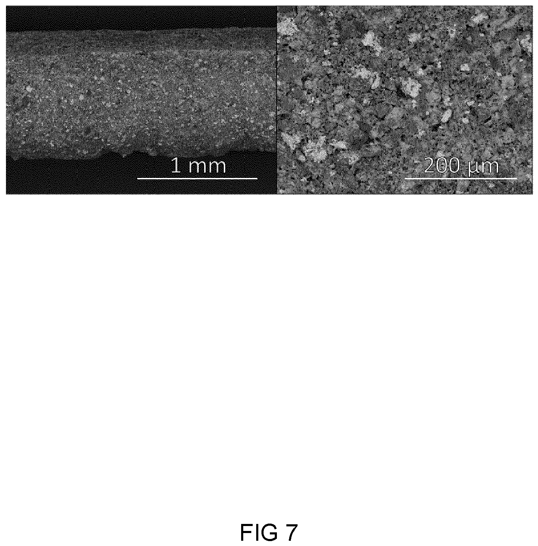

Fig. 7 shows scanning electron microscopy (SEM) images of a single extruded fiber consisting of the activated carbon and silicate adhesive. SEM images of a single composite fiber were taken to evaluate the distribution of the silicate adhesive throughout the activated carbon. A highly porous fiber was observed, while the silicate adhesive was homogenously distributed throughout the structure, as shown in Fig. 7. An excellent wetting of the activated carbon powder by the adhesive is observed in the SEM image, further confirmed by the minor decrease in density of the composite material versus the original activated carbon powder and cured adhesive.

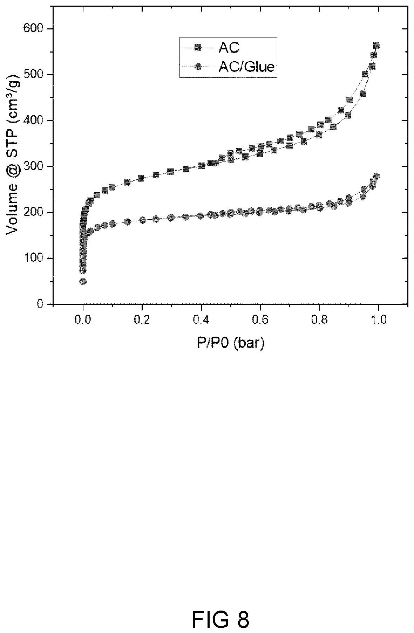

Fig. 8 shows N₂ isotherm of the activated carbon powder compared to the activated carbon/glue composite. A complete porosity characterization was performed using a combination of several techniques, including N₂, Ar and CO₂ sorption as well as mercury intrusion porosimetry. N₂ isotherms of the crushed monolith structure in comparison with the activated carbon powder are shown in Fig. 8. A significant change in isotherm shape is observed, indicating a clear difference in pore shape, size and total pore volume. The activated carbon powder shows a typical type IV isotherm due to its hysteresis loop associated with capillary condensation, indicative of the presence of mesopores. This can be associated with the plate-like carbon particles, forming slit-like pores. Moreover, a steep increase is observed at the lower pressure range, indicating a significant amount of micropores as well. Addition of the silicate adhesive to the monolith structure clearly reduces the total meso- and micro-porosity, indicated by the loss in hysteresis as well as the reduced uptake in the lower pressure range. A reduction of the BET-value from 1010 m²/g to 700 m²/g is observed for the activated carbon powder and the composite, respectively. Using the t-plot method, a decrease of ~20% in micropore volume is shown as well, due to the presence of the silicate adhesive. The cured adhesive itself displayed a very low BET surface area (1.2 m²/g), therefore a full isotherm of this material is not included.

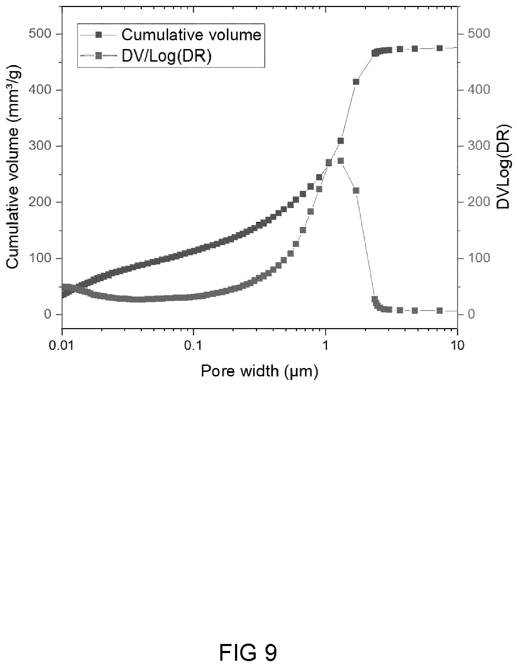

Fig. 9 shows mercury porosimetry measurement on the activated carbon/glue composite. Fig. 9 includes the pore size distribution measured by mercury intrusion porosimetry on the structured monolithic composite sorbent. Around 0.43g of 3D-printed material was used to evaluate the macroporosity of the structure. The measurement indicates a high amount of intrastructural porosity (45.7 %) inside the fibers. A total cumulative volume of 480 mm³/g is shown, while the average pore radius and density was equal to 0.92 µm and 1.76 g/cm³ respectively.

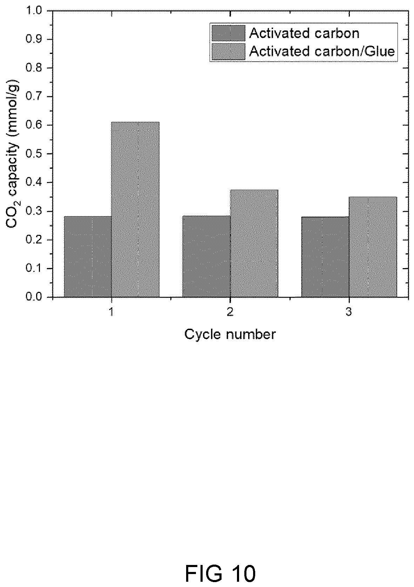

Fig. 10 shows a comparison of the cyclic CO₂ sorption capacity at 10% CO₂, analyzed by TGA. The sample is degassed at 120°C prior to the first cycle and subsequently regenerated at room temperature in the following cycles.

The cyclic CO₂ sorption capacity of the composite monoliths was evaluated and compared to the activated carbon powder. In a first step, the sample was degassed at 120°C in a N₂ flow for 3 hours. After regeneration and cooling down to room temperature, 10% CO₂ was added to the sample chamber to evaluate the weight increase over time (cycle 1). Following the adsorption step, desorption of the CO₂ gas is induced by flowing pure N₂ through the sample chamber at room temperature. This cycle is repeated 3 times in total to evaluate the regenerability and performance of the sorbent. The comparison of the activated carbon powder and the activated carbon/glue composite is shown in Fig. 10. As observed, the CO₂ capacity of the activated carbon powder is stable over the different cycles and is able to be fully regenerated by N₂ purging without the use of an increased temperature during the desorption step. A total CO₂ uptake capacity at 10% CO₂ of 0.28 mmol/g is observed.

In contrary to the activated carbon powder, the composite shows a significant decrease in sorption capacity throughout the different cycles.

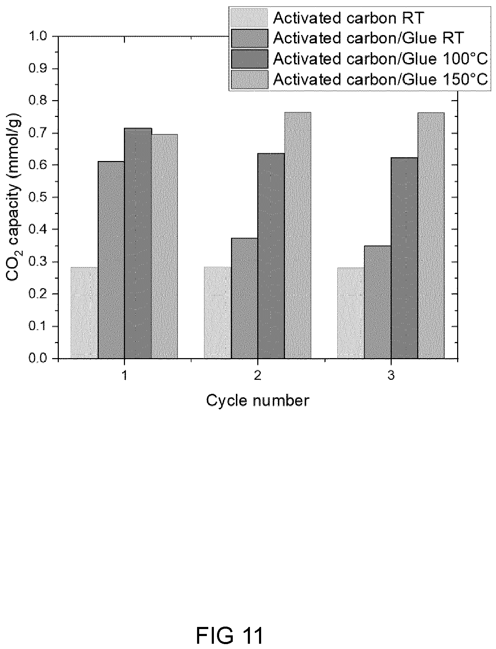

Fig. 11 shows an effect of desorption temperature on the cyclic CO₂ capacity of the activated carbon/glue composite at N₂-10% CO₂, analyzed by TGA. Cycle 1 is equal to the CO₂ adsorption after a sample activation of 120°C (standard). Cycle 2 and 3 are equal to the CO₂ adsorption after the degassing temperature depicted in the legend. The first cycle is after activation at 120°C (to remove remaining water before adsorption, specifically used for getting accurate TGA measurements). For actual applications, this activation may be optional and thus not required.

Increasing the desorption temperature up to 150°C can significantly increase the adsorption capacity (0.76 mmol/g vs 0.28 mmol/g). Furthermore, considering that the composites consist of 50% activated carbon, the adsorption capacity increases from 0.14 mmol/g to 0.76 mmol/g, i.e. about 5 times more CO2 uptake. This shows the large potential of the potassium silicate as a low-temperature binder for carbon-based materials while having an active contribution to the overall CO2 working capacity.

In some examples, in order to fully regenerate the composite sorbent, two different desorption temperatures were evaluated (100°C and 150°C). In a first step, a similar degassing procedure at 120°C was applied as described in the previous paragraph. Adsorption was then carried out by using a 10% CO₂ in N₂ stream, resulting in the total CO₂ sorption capacity displayed at cycle number 1. A sorption capacity between 0.60 mmol/g and 0.70 mmol/g is shown for all three samples after cycle 1, indicating the reproducibility of the composite material.

The first desorption step is then induced by increasing the temperature from room temperature up to 100°C or 150°C. While a regeneration at room temperature significantly reduced the working capacity of the sorbent material by 40% (0.61 mmol/g to 0.37 mmol/g), regeneration at 100°C only decreased the working capacity by 11% (0.7 mmol/g to 0.62 mmol/g). Furthermore, the sorption capacity of the material regenerated at 150°C induced a significant increase of the CO₂ uptake by 10% (0.69 mmol/g to 0.76 mmol/g). In comparison with the reduction of the CO₂ uptake after desorption at room temperature, regenerating at higher temperatures clearly induces a significant increase in CO₂ uptake, indicating the recovery of the active sites. Using a thermal desorption step at temperatures of 100°C and 150°C, the capacity at 10% CO₂ is increased up to 0.62 mmol/g and 0.76 mmol/g respectively. In comparison with the activated carbon powder, this results in a CO₂ uptake that is almost tripled (0.28 mmol/g vs 0.76 mmol/g).

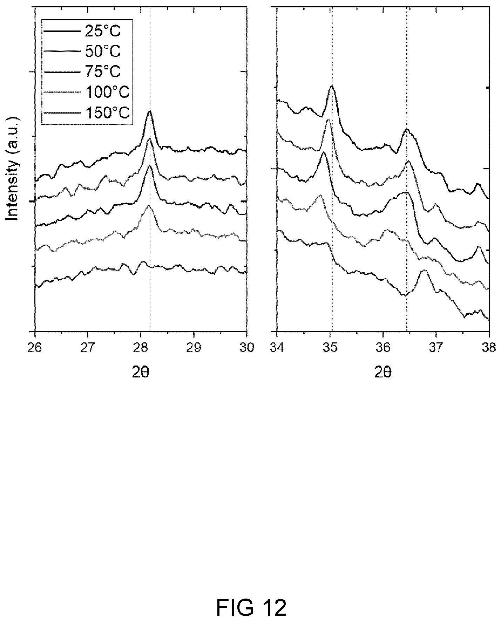

Fig. 12 shows temperature-controlled XRD spectrum to investigate the transition of KHCO₃ to K₂CO₃ at elevated temperatures.

The TGA results indicate a change in sorption mechanism when applying the adhesive to the activated carbon powder. While earlier results show the decreased specific surface area and micropore volume of the composite material, significantly higher sorption capacities were observed even after multiple cycles with room temperature regeneration. Additionally, TGA-experiments show that the active sites require higher temperatures in order to be fully regenerated. Both observations indicate that the composite material adsorbs CO₂ by a combination of physisorption in the remaining pores of the activated carbon and chemisorption. This chemisorption process is most likely the conversion of potassium bicarbonate (KHCO₃) to potassium carbonate (K₂CO₃). The incomplete regeneration at room temperature indicates that this regeneration is not sufficient to recover all chemisorption sites. Interestingly, the addition of this adhesive also increases the working capacity, even after regeneration at room temperature by N₂ flushing.

To confirm the described mechanism including the conversion of potassium bicarbonate (KHCO₃) to potassium carbonate (K₂CO₃) at higher desorption temperatures, an in situ X-ray diffraction study was performed where the temperature of the composite sample was increased stepwise up to 150°C. The result can be observed in Fig. 12, showing the diffraction pattern of the activated carbon/silicate adhesive composite. The composite was measured in crushed form at room temperature and subsequently heated up in situ to 150°C. Several XRD scans were performed during heating to evaluate the transformation of the characteristic peaks. At room temperature, three characteristic peaks can be observed at 28.18°, 35.05° and 36.55°, indicating the presence of KHCO₃. A clear reduction in peak intensities is observed with increasing temperature, confirming the conversion of KHCO₃ to K₂CO₃. Complete conversion of KHCO₃ is observed after heating at 150°C. These in situ XRD observations, coupled with the increased working capacities as displayed in the earlier TGA-looping experiments, show the large potential of the silicate adhesive as an active low-temperature binder for the creation of strong monolithic activated carbon structures, suitable for a low-temperature and energy-efficient regeneration.

In the above experimental results, structured activated carbon sorbents were developed using 3D micro-extrusion technology by using potassium silicate as low-temperature binder. A paste optimization was performed to achieve a balance between the printability, mechanical strength of the sorbent after printing and a maximized CO₂ sorption capacity. Several monolithic/multi-channel type structures were developed and characterized in terms of total pore volume, pore size distribution and the resulting CO₂ uptake. As observed using thermogravimetric analysis, the use of the silicate binder doubled the working capacity of the 3D-printed activated carbon sorbent. This working capacity dropped slightly after regeneration at room temperature using N₂-purging, but still exceeded the CO₂ uptake of the original activated carbon powder by 25%. By increasing the regeneration temperature up to 150°C, an improved working capacity of the composite material up to 0.76 mmol/g was observed after several cycles, almost tripling the working capacity of the original activated carbon powder (0.28 mmol/g). An in situ XRD study confirmed the proposed mechanism, including a combination of physisorption in the remaining activated carbon micropores and chemisorption resulting in the formation of potassium bicarbonates. These results show the large potential of the silicate adhesive as an active low-temperature binder for creating strong monolithic activated carbon structures, suitable for low-temperature and energy-efficient regeneration.

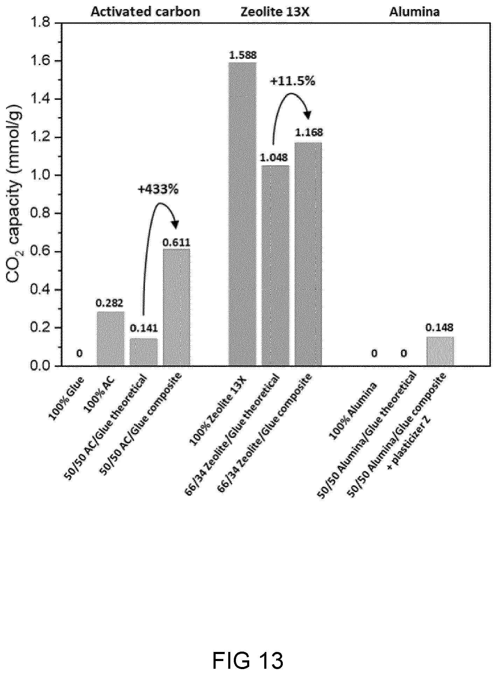

Fig. 13 shows a comparison of the CO₂ sorption capacity at N₂-10% CO₂ of different adsorbent/potassium glue composites, analyzed by TGA. The sample is degassed at 120°C prior to the CO₂ uptake measurement. The theoretical capacity is based on the calculation of the individual components CO₂ uptake. The glue does not show any CO₂ adsorption.

The build material of the 3D monolith structure may be a mixture/combination of potassium silicate solution with a first material. In this example, the first material is exemplary activated carbon. Other first materials may also be used. Furthermore, in this example, the structure is shaped by performing 3D printing or extrusion. After shaping, the aqueous silicate solution can transition to a carbonate described by the following reactions:
*Transition from silicate to carbonate*

   K₂SiO₃ + 2CO₂ + H₂O ↔ 2KHCO₃ + SiO₂
*Desorption reaction*

   2KHCO₃ + 0,5 H₂O ↔ K₂CO₃.1,5H₂O + CO₂

   2KHCO₃ ↔ K₂CO₃+ H₂O + CO₂
*Adsorption reaction*

   K₂CO₃.1,5H₂O + CO₂↔ 2KHCO₃ + 0,5 H₂O

   K₂CO₃ + CO₂ + H₂O ↔ 2KHCO₃

Advantageously, this results in a structured hybrid adsorbent, combining chemisorption and physisorption, avoiding the need of a high-temperature thermal treatment and providing high mechanical strength, good chemical and thermal stability while improving the total CO₂ capacity. This has significant benefits compared to lithium or sodium metasilicate as CO₂ sorbents in powder or pelletized form. The use of potassium silicate as binder for 3D-printed structures (or extruded) provides significant enhancements. Moreover, potassium typically shows higher sorption capacity as well as faster kinetics at lower temperatures in comparison with sodium silicates, enabling a new type of regenerable chemical absorbents.

In this example, potassium silicate solution is combined with activated carbon in a 50/50 solid ratio. Other ratios are possible.

The use of solid potassium silicate might expand the potential adsorbent/binder ratio significantly. The developed paste is structured by 3D-printing, resulting in a monolithic composite which shows sufficient mechanical strength (~1MPa). However, other manufacturing techniques, such as extrusion, may also be employed. No high-temperature thermal treatment is needed (usually employed by zeolites), since the composite is cured at 94°C to ensure the removal of the water content. Lower temperatures might be possible as long as sufficient water is removed from the structured sorbent after printing. The sorption capacity after activation at 120°C increases with 433% when activated carbon is combined with the potassium silicate solution in comparison with the theoretical expected CO₂ uptake, see Fig. 13. Furthermore, the potassium silicate may also increase the CO₂ uptake when combined with other adsorbents. In some cases, the increase may be limited due to hydrophilicity of the surface.

It will be appreciated that the structure according to of the invention can be employed for various applications. For example, the areas may be broadly divided into energy production and industrial emissions from chemical and materials processes. Regarding energy production there is contemplated herein the removal of carbon dioxide found in fuel gas produced from electricity generation (for example, steam boilers and combined cycle gas turbines) and steam production for industrial purposes (for example, steam heat and steam turbine drives). Large volumes of hydrocarbon fuel sources, such as coal, petroleum liquids and natural gas, are burned to produce heat and power. The combustion of hydrocarbons with air results in the release of carbon dioxide as a constituent of fuel gas into the atmosphere. Illustratively, fuel gas from combustion of coal may contain around 15% (by volume) carbon dioxide along with water vapor, nitrogen and other components. While still significant, slightly lower carbon dioxide levels may generally be contained in fuel gas from combustion of petroleum liquids and natural gas as a result of their chemical makeup.

Another broad energy production area of applicability of the subject invention is the removal of carbon dioxide from natural gas and produced gas. As appreciated by those skilled in the art, natural gas as it is removed from the well may contain varying amounts of carbon dioxide depending upon the well and the methods of enhancing natural gas production. It may often be desirable to reduce the amount of carbon dioxide from the raw natural gas, for example, as a way of meeting heat content specifications.

Another example of applicability of the invention is upgrading of biogas into biomethane.

Although the procedures of for example the methods and processes described herein may be described in a particular order for ease of description, unless the context dictates otherwise, various procedures may be reordered, added, and/or omitted in accordance with various embodiments. Furthermore, the procedures described with respect to one method or process may be incorporated within other described methods or processes. Likewise, system components described according to a particular structural architecture and/or with respect to one system may be organized in alternative structural architectures and/or incorporated within other described systems. Therefore, while various embodiments are described with or without certain features for ease of description and to illustrate exemplary aspects of those embodiments, the various components and/or features described herein with respect to a particular embodiment can be substituted, added and/or subtracted from among other described embodiments, unless the context dictates otherwise.

The terms "first", "second", and the like, as used herein do not denote any order, quantity, or importance, but rather are used to distinguish one element from another.

It will be appreciated that the extruded filament may also be known in the art as a strut, fibre/fiber, rod, raster, and other terms.

It will be appreciated that the layer thickness can be seen as a layer height or slice thickness. It represents a z-increment when 3D printing the porous structure.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A carbon dioxide capture structure having a monolith three-dimensional shape, the structure being porous with interconnected pores which are accessible from an exterior side of the structure, wherein the structure is made of a build material comprising a first material and a second material, wherein the first material is a sorbent material and/or a support material, and wherein the second material is a binder material including potassium silicate.

2. The carbon dioxide capture structure of claim 1, wherein the first material and second material have a weight ratio in a range from about 0.8:0.2 to about 0.2:0.8, more preferably from about 0.6:0.4 to about 0.4:0.6.

3. The carbon dioxide capture structure according to claim 1 or 2, wherein the sorbent material is at least one of a carbon based sorbent material, a zeolite sorbent material, a silica-based sorbent material, a clay sorbent material, an organic polymer or resin sorbent material, or a metal organic framework sorbent material.

4. The carbon dioxide capture structure according to any one of the preceding claims, wherein the carbon based sorbent material includes at least one of an activated carbon, activated coke, activated charcoal, activated carbon fibers, biochars or chars.

5. The carbon dioxide capture structure according to any one of the preceding claims, wherein the binder material includes at least at least 40 wt.% of potassium silicate, preferably at least 50 wt.%, more preferably at least 60 wt.%, even more preferably at least 80 wt.%, most preferably at least 90 wt.%.

6. The carbon dioxide capture structure according to any one of the preceding claims, wherein the support material is functionalized with amine functional groups.

7. The carbon dioxide capture structure according to any one of the preceding claims, wherein the support material is at least one of alumina or silica functionalized with amine functional groups.

8. The carbon dioxide capture structure according to any one of the preceding claims, wherein the structure comprising a porous arrangement of build material with intra-structure pores.

9. The carbon dioxide capture structure according to any one of the preceding claims, wherein the structure comprises interconnected filaments of build material printed in a plurality of stacked layers, wherein the filaments of the consecutive layers are connected to one another to obtain a porous arrangement with intra-structure pores formed between filaments.

10. A method of making a carbon dioxide capture product, the method including:
providing a first material, wherein the first material is a sorbent material and/or a support material;
providing a second material, wherein the second material is a binder material including Potassium silicate;
providing a solvent, such as water;
mixing the first material, second material and the solvent to produce a sorbent mixture;
building a monolith three-dimensional porous structure using the sorbent mixture as build material; and
treating the monolith three-dimensional porous structure so as to obtain the carbon dioxide capture product; and
wherein the treating including drying with a maximum temperature of 150 °C.

11. The method according to claim 10, wherein the binder material is a solution or dispersion of potassium silicate in a liquid.

12. The method according to claim 10 or 11, wherein treating includes drying the formed porous structure at a temperature ranging from 60 °C to 120 °C, more preferably 75 °C to 110 °C.

13. The method according to any one of the preceding claims 10-12, wherein the monolith three-dimensional porous structure is built layer by layer employing a three-dimensional printing process.

14. A method for removing carbon dioxide from a gas or fluid mixture, the method comprising:
bringing the gas or fluid mixture in contact with a carbon dioxide capture structure; and
capturing at least a portion of the carbon dioxide in the gas or fluid mixture in the carbon dioxide capture structure; and
wherein the carbon dioxide capture structure has a monolith three-dimensional shape, the structure being porous with interconnected pores which are accessible from an exterior side of the structure, wherein the structure is made of a build material comprising a first material and a second material, wherein the first material is a sorbent material and/or a support material, and wherein the second material is a binder material including potassium silicate.

15. The method of claim 14, wherein one or more successive cycles are performed, each cycle involving an adsorption step and a subsequent desorption step, wherein carbon dioxide in the gas or fluid mixture is captured in the carbon dioxide capture structure in the adsorption step, and wherein the carbon dioxide captured in the carbon dioxide capture structure is released in the desorption step, wherein the desorption step is carried out at room temperature, preferably at an elevated temperature, wherein the elevated temperature is greater than 60 °C, preferably greater than 80 °C, even more preferably greater than 100 °C, and wherein the adsorption step is carried out at a pressure in a range of 1 to 35 bar, preferably 1 to 10 bar, and wherein the desorption step is carried out at a pressure in a range of 20 mbar to 1 bar, preferably 100 mbar to 1 bar.

16. A system for removing carbon dioxide from a gas or fluid mixture, comprising:
a compartment with one or more carbon dioxide capture structures according to any one of the preceding claims 1-9 placed therein; and
a guiding unit configured to at least partially flow the gas or fluid mixture through intra-structure pores of the one or more carbon dioxide capture structures placed within the compartment.
